# EUROPEAN PATENT SPECIFICATION

(11) **EP 0 449 727 B1**
(45) Date of publication and mention of the grant of the patent: **03.01.1996**
(21) Application number: 91400820.6
(22) Date of filing: 26.03.1991
(51) Int. Cl.: F16J 15/34

(54) **System and method for actively cooling dry-running gas seals**
Verfahren und System zur aktiven Kühlung einer trockenlaufenden Gasabdichtung
Méthode et dispositif de refroidissement actif pour joint à frottement sec étanche aux gaz

(30) Priority: 28.03.1990 US 500560
(43) Date of publication of application: 02.10.1991
(73) Proprietor: EG&G SEALOL, INC., Providence, Rhode Island 02905 (US)
(72) Inventor: Gardner, James F., Exeter, Rhode Island 02822 (US); Short, John, North Scituate, Rhode Island 02857 (US); Datta, Amitava, Dr., East Greenwich, Rhode Island 02818 (US)
(74) Representative: Gutmann, Ernest

(56) References cited:
- EP-A- 0 312 196
- DE-A- 1 450 285
- DE-A- 3 533 829
- FR-A- 2 192 676

## Description

### 1. Field of the invention

The present invention relates to cooling a dry-running gas seal.

### 2. Description of the Related Art

Dry-running gas seals are a relatively mature technology. One of the initial working concepts of dry-running gas seals was provided in U.S.-A-3,499,653 to Gardner. Further refinements which have improved the performance of dry-running gas seals are disclosed, for example, in U.S.-A-4,212,475 to Sedy and 4,768,790 to Netzel et al.

Dry-running gas seals offer the advantage of consuming less power than older oil buffered gas seals. However, gas is a rather poor conductor of heat. Thus, although absolute levels of power generated are small, the temperature buildup in the seal cavity of dry-running gas seals can be great. For example, the 3-5 horsepower (2.237 ö 3.728 KW) generated for a seal on a 4 inch (10 cm.) shaft operating at 68 atm and 16,000 rpm can result in operating temperatures as high as 190°C.

FR-A-2192676 on which disclosure the preambles of independent claims 1, 3 and 8 are based, describes a dry-running gas seal for sealing a high pressure area from a low pressure area which comprises a stationary seal ring carrier holding a rotary seal ring facing the stationary seal ring and circulating means for capturing a portion of the gas surrounding the rotary seal ring carrier. DE-A-1450285 describes a seal for sealing a high pressure area from a low pressure area in a pump.

Increased temperature buildup causes reduced "O" ring life and increased differential thermal growth between the seal rings and their carriers.

### SUMMARY OF THE INVENTION

The present invention overcomes the problems and disadvantages of the prior art by providing a system for cooling the sealing area. An object of the invention is to provide a reduction in operating temperature in the seal ring components.

Additional objects and advantages of the invention will be set forth in part in the description which follows, and in part will be obvious from the description or may be learned by practice of the invention. The objects and advantages of the invention will be realized and attained by means of the elements and combinations particularly pointed out in the appended claims.

To achieve the objects and in accordance with the purpose of the invention, as embodied and broadly described herein, the invention comprises a dry-running gas seal for sealing a high pressure area from a low pressure area. The seal includes
a stationary seal ring carrier holding a stationary seal ring;
a rotary seal ring carrier holding a rotary seal ring in a cavity to face the stationary seal ring;
a heat exchanger in fluid communication with the cavity and
a return conduit in fluid communication with the heat exchanger and having a return outlet adjacent to the cavity;
wherein the dry-running gas seal is characterized by apertures having flow scoops positioned radially outside the rotary seal ring carrier and in fluid communication with the cavity for capturing a portion of the gas surrounding the rotary seal ring carrier and transferring the captured gas to the heat exchanger for cooling so that the cooled gas is returned through the return conduit to the high pressure area adjacent to the seal.

Also within the scope of the invention is an active cooling system for a dry-running gas seal of the type having a statinary seal ring, a stationary seal ring carrier attached to a housing, a rotary seal ring, and a rotary seal ring carrier for holding the rotary seal ring within a cavity. The active cooling system includes
an annular extension of the stationary seal ring carrier adapted for extending over but not contacting the rotary seal ring carrier;
an exhaust bore formed in the housing, the exhaust bore being in fluid communication with the cavity;
a heat exchanger in fluid communication with the exhaust bore; and
a return bore formed in the housing, the return bore being in fluid communication with the heat exchanger and having a return outlet adjacent the cavity;

wherein the active cooling system is characterized by a plurality of apertures formed in the annular extension of the stationary seal ring carrier to provide fluid communication between the cavity and the exhaust bore.

The invention also relates to a method of cooling a dry-running gas seal having a stationary seal ring carrier and a rotary seal ring carrier for sealing a process gas within a cavity. The method includes
capturing a portion of the gas around the rotary seal ring carrier; transferring the captured gas to a heat exchanger; cooling the captured gas with the heat exchanger; cooling the captured gas with the heat exchanger; and returning the cooled gas to the cavity;
wherein the method is characterized in that the gas around the rotary seal ring carrier is captured by apertures having flow scoops positioned radially outside the rotary seal ring carrier, wherein the apertures provide fluid communication between the cavity and the heat exchanger.

It is to be understood that both the forgoing general description and the following detailed description are exemplary and explanatory only and are not restrictive of the invention as claimed.

The accompanying drawings which are incorporated in and constitute part of the specification, illustrate one embodiment of the invention and together with the description serve to explain the principles of the invention.

### BRIEF DESCRIPTION OF THE DRAWINGS

Figure 1 is a partial cross-sectional view of a dry-running gas seal in accordance with this invention.

Figure 2 is a partial cross-sectional view of Section II-II of Fig. 1.

Figure 3 is a partial view of Section III-III of Fig. 2 showing the stationary seal ring retainer made according to the present invention.

Figure 4 is a partial cross-section of a rotary seal ring carrier according to the invention.

### DESCRIPTION OF THE PREFERRED EMBODIMENT

Reference will now be made in detail to the presently preferred embodiment of the invention, an example of which is illustrated in the accompanying drawings. Wherever possible the same reference numbers will be used throughout the drawings to refer to the same or like parts.

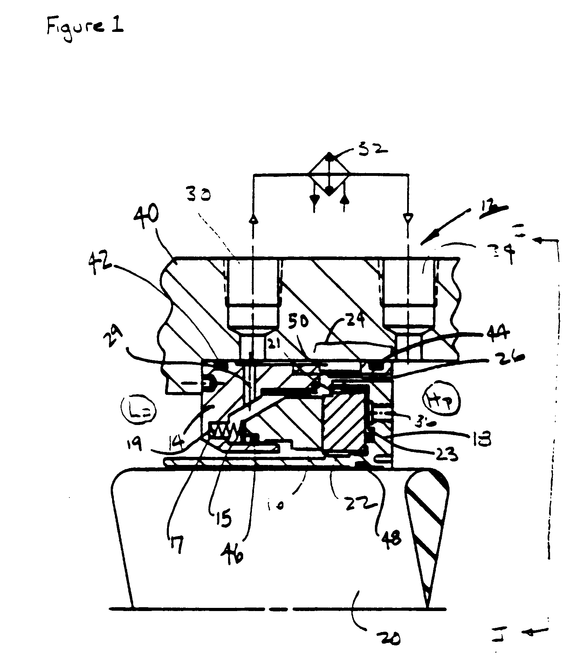

Fig. 1 shows a dry-running gas seal 12 of the invention. The seal has stationary seal ring carrier 14 with stationary seal ring 16 mounted therein. Rotary seal ring carrier 18 is mounted on a shaft 20 and holds the rotary seal ring 22 such that it is facing the stationary seal ring. The seal as thus described seals a process gas (indicated by "Hp" in Fig. 1) in fluid communication with the radially outer side of the seal from a low pressure area (indicated as "Lp" in Fig. 1) in fluid communication with the radially inner side of the seal.

The stationary seal ring 16 is preferably made of carbon graphite, although it can be made from other commercially acceptable materials known in the art. Stationary seal ring carrier 14, which holds the stationary seal ring in annular pocket 15, is preferably made of Inconel 625 or stainless steel. The pocket may be formed by turning or other methods well known in the art. A series of holes 17 are bored into the bottom of the pocket. Springs 19 fit into those bore holes and serve to engage the stationary seal ring with the rotary seal ring when the seal is not pressurized.

The stationary seal ring carrier 14 is fixed to a housing 40 by conventional means, for example "O" rings 42 and 44 are positioned at the rear and front of the stationary seal ring carrier and form a seal between the stationary seal ring carrier 14 and housing 40. An "O" ring 46 similarly forms a seal between the stationary seal ring carrier 14 and the seal ring 16. As a result, the primary flow path for any gas leakage is between the faces of stationary seal ring 16 and rotary seal ring 22.

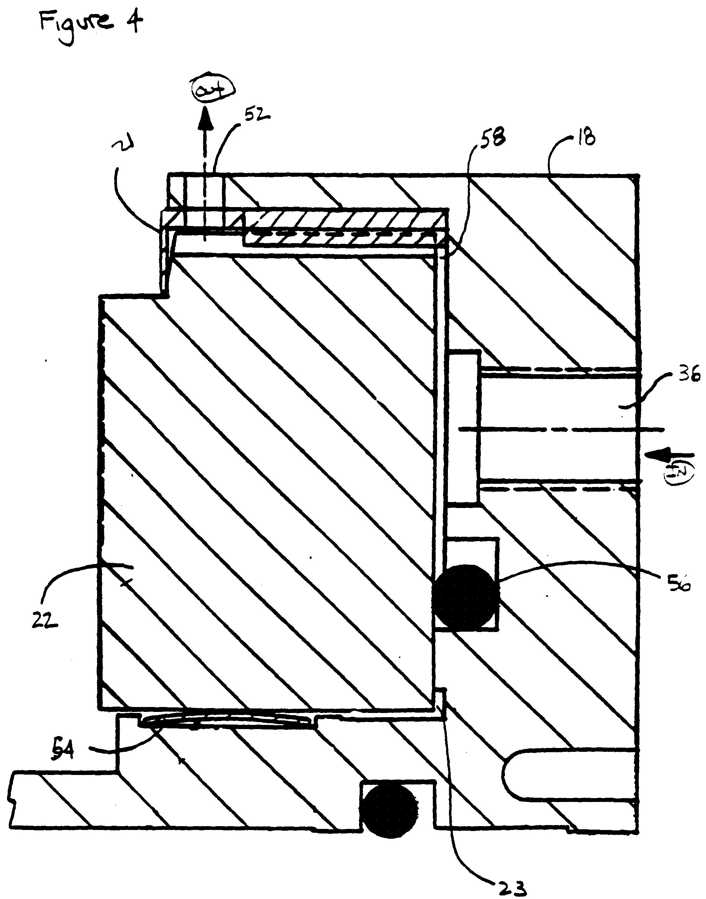

The rotary seal ring 22 is preferably made of silicon carbide, although it can be made from other commercially acceptable materials known in the art. The rotary seal ring is held in the pocket 23 of the rotary seal ring carrier 18 by an annular "L" shaped clip 21 (shown best in Fig. 4) which press fits against the outer portion of the pocket. The rotary seal ring carrier 18 fits over shaft 20 and includes an "O" ring 48 which forms a seal between the shaft and the carrier 18.

In the embodiment shown, the face of the rotary seal ring has spiral grooves formed thereon. The grooves serve to provide both hydrostatic and hydrodynamic forces for separating The sealing faces. When exposed to a pressurized gas, the gas enters the grooves and provides an opening force. That opening force is balanced by the gas pressure acting on the back of the stationary seal ring 16, which pressure tends to close the sealing faces. The grooves preferably have a average groove angle of 5-15° or 60-85° and extend from the outer periphery across 50-70% of the sealing face. The inventors have found that the above groove angles and sizing of the grooves provide optimum results.

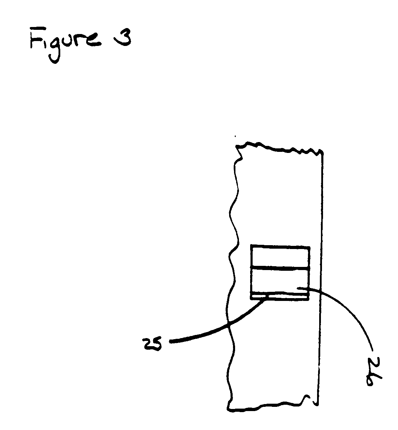

In accordance with the preferred embodiment of the invention, the seal includes circulating means for cooling the gas surrounding the seal. As embodied herein, the circulating means includes an extension 24 of the stationary seal ring carrier 14 which extends the carrier over the rotary seal ring carrier 18. The extension contains a plurality of apertures 25 preferably having flow pickup scoops 26 formed at each aperture, one of which is shown in Fig. 3. The scoops promote the capture of the gas at the apertures. The apertures and scoops are preferably uniformly spaced about the circumference of the extension 24.

As shown in Fig. 1, an annular pocket or recess 50 is formed between the axially intermediate portion of the stationary seal ring carrier 14 and the adjacent inner wall of housing 40. This recess 50 is positioned between "O" rings 42 and 44. The forward or upstream portion of the recess 50 is positioned opposite the outer circumference of the rotary ring carrier 18 and the rotary ring 22. The plurality of apertures 25, which are preferably aligned with the outer surface of the rotary seal ring carrier 18, are in fluid communication with the annular recess 50. Annular recess 50 in turn is in fluid communication with exhaust bore 30 formed in housing 40. Exhaust bore 30 is in fluid communication with heat exchanger 32, which in turn is in fluid communication with return bore 34 formed in the housing 40. Return bore 34 is formed upstream of recess 50 and rotary ring carrier 18. In the preferred embodiment, the return bore 34 is positioned immediately adjacent the rotary carrier 18.

As will be described below, these elements provide a flow path for gas to flow through apertures 25, recess 50, exhaust bore 30, heat exchanger 32 and return bore 34. The relatively hot gas at the interface between the carrier 14 and carrier 18 is cooled and returned to the sealed high pressure area. The heat exchanger may be of conventional design as known in the art, for example, a shell and tube heat exchanger (available commercially from Exergy, Inc. and other sources).

When the seal is operating, the rotary carrier 18 and seal ring 22 rotate at high speeds relative to the housing 40 and stationary seal ring carrier 14 and seal ring 16. This high speed rotation causes the gas at the interface between carrier 18 and carrier 14 to move in the interface. The average velocity of the gas in the clearance between the rotary seal ring retainer and the stationary seal ring retainer extension is approximately one-half the velocity of the outside diameter of the rotating seal ring carrier. This means that for a 15 cm O.D. rotary seal ring retainer rotating at 16,000 rpm with a O.D. circumferential speed of approximately 120 meters per second, a gas velocity of approximately 60 meters per second is created.

The scoops 26 and apertures 25 capture a portion of the dynamic head, i.e., the pressure equivalent of the energy of motion. This dynamic head for a 60 m per second velocity with air at 68 atm produces approximately a 1.4 atm pressure increase between the recess 50 within the extension 24 and the process gas "Hp". In accordance with the invention, the pressure is sufficient to flow the gas in recess 50 through exhaust bore 30 to a heat exchanger 32 where the gas is cooled and then returned through return bore 34 to a position close to the back of the rotary seal ring retainer.

Furthermore, a circulation of cooling gas to the back of stationary seal ring 16 may be provided by gas flow through orifice 29 formed in carrier 14 and preferably aligned with conduit 30. Orifice 29 causes a portion of the gas that would normally flow from recess 50 through exhaust bore 30 to flow behind the stationary seal ring. Although the gas passing through this orifice has not yet passed through the heat exchanger, a measure of cooling is still provided because the gas in the seal cavity has been cooled by the heat exchanger and is cooler than in a conventional dry-running gas seal.

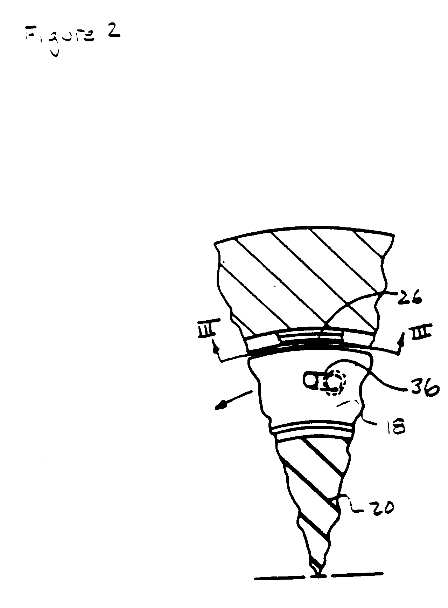

Preferably, as shown in Figs. 2 and 4, the rotary seal ring retainer includes a series of holes 36 formed in the back in order to circulate the cooled gas around the rotary seal ring. These holes are slanted toward the direction of rotation at an angle of 35° to 45° from the plane of rotation. This orientation pumps gas into and around the back of the rotary seal ring and out vent holes 52 which are provided in the side of the rotary seal ring carrier. Preferably, 6 to 8 holes 36 are provide which are circular in cross-section with a 0.6 to 1 cm diameter. As an alternative to the vent holes, vent openings may be provided in the axially orthogonal part of the "L" shaped spring clip 21 which serves, along with finger spring 54, to retain the rotary seal ring 21 in pocket 23. The vent holes allow pocket 23 to have a flow path 58 for the gas because the rotary seal ring is spaced from the seal ring carrier so that flow may enter at holes 36 ("in") and exit at holes 52 ("out"). "O" ring 56 prevents the gas entering holes 36 from leaking past the seal.

Other preferred elements of gas seal design, along with an explanation of gas seal theory, is presented in copending application Serial No. 07/466,652, filed January 17, 1990 and assigned to the same assignee. Copending application Serial No. 07/466,652 is explicitly incorporated herein by reference.

Cooling the seal cavity results in increased seal face flatness, improved elastomer life (e.g., "O" ring life) and minimizes the problems associated with differential thermal expansion between the seal rings and their carriers.

In the preferred embodiment shown in the drawings, the apertures 25 and scoops 26 are formed in the stationary carrier. This embodiment is preferred since the system can be adapted to a seal environment by simply placing bores 30 and 34 in the housing at the seal. It should be apparent to those skilled in the art, however, that a plurality of apertures and flow channels could be formed in the housing.

It will be apparent to those skilled the art that other modifications and variations can be made in the seal of the present invention and in the construction of this cooling system without departing from the scope of the invention.

Other embodiments of the invention will be apparent to those skilled in the art from consideration of the specification and practice of the invention disclosed herein. It is intended that the specification and examples be considered as exemplary only, with the true scope of the invention being indicated by the following claims.

## Claims

1. A dry-running gas seal for sealing a high pressure area from a low pressure area, the seal including
a stationary seal ring carrier (14) holding a stationary seal ring (16);
a rotary seal ring carrier (18) holding a rotary seal ring (22) in a cavity to face said stationary seal ring (16);
a heat exchanger (32) in fluid communication with the cavity and
a return conduit (34) in fluid communication with the heat exchanger (32) and having a return outlet adjacent to the cavity;
wherein said dry-running gas seal is characterized by apertures (25) having flow scoops (26) positioned radially outside the rotary seal ring carrier (18) and in fluid communication with the cavity for capturing a portion of the gas surrounding said rotary seal ring carrier (18) and transferring the captured gas to the heat exchanger (32) for cooling so that the cooled gas is returned through the return conduit (34) to the high pressure area adjacent to the seal.

2. A dry-running gas seal as claimed in claim 1 characterized in that a portion (24) of the stationary seal ring carrier (14) extends over at least a portion of said rotary seal ring carrier (18) and said apertures (25) are formed in said stationary seal ring carrier (14).

3. An active cooling system for a dry-running gas seal of the type having a stationary seal ring (16), a stationary seal ring carrier (14) attached to a housing (40), a rotary seal ring (22), and a rotary seal ring carrier (18) for holding the rotary seal ring (22) within a cavity, the active cooling system including
an annular extension (24) of the stationary seal ring carrier (14) adapted for extending over but not contacting the rotary seal ring carrier (18) ;
an exhaust bore (30) formed in the housing (40), said exhaust bore (30) being in fluid communication with the cavity;
a heat exchanger (32) in fluid communication with said exhaust bore (30); and
a return bore (34) formed in the housing (40), said return bore (34) being in fluid communication with said heat exchanger (32) and having a return outlet adjacent the cavity;
wherein said active cooling system is characterized by a plurality of apertures (25) formed in said annular extension (24) of the stationary seal ring carrier (14) to provide fluid communication between the cavity and the exhaust bore (30.

4. An active cooling system as claimed in claim 3, characterized in that said apertures (25) include scoops (26) extending from said apertures (25), said scoops (26) extending toward but not contacting the rotary seal ring carrier (18).

5. An active cooling system as claimed in claim 4, wherein said rotary seal ring carrier (18) holds said rotary seal ring (22) in an annular pocket (23) and wherein said system is further characterized by:
a flow path (58) in said pocket (23) formed between said rotary seal ring carrier (18) and said rotary seal ring (22);
at least one hole (36) passing through said rotary seal ring carrier (18) and providing fluid communication to said flow path (58) in the pocket (23), said hole (36) being slanted toward the direction of rotation, whereby gas is drawn toward said rotary seal ring (22) when the rotary seal ring carrier (18) is rotating; and means for venting said gas from said flow path.

6. An active cooling system as claimed in claim 5, characterized in that said means for venting comprises at least one hole (52) in the outer periphery of said pocket (23).

7. An active cooling system as claimed in claim 4, characterized in that if further comprises an orifice (29) adapted for allowing fluid communication between said apertures (25) and an area between the back of said stationary seal ring (16) and said stationary seal ring carrier (14).

8. A method of cooling a dry-running gas seal having a stationary seal ring carrier (14) and a rotary seal ring carrier (18) for sealing a process gas within a cavity, the method including
capturing a portion of the gas around the rotary seal ring carrier (18); transferring the captured gas to a heat exchanger (32); cooling the captured gas with the heat exchanger (32); cooling the captured gas with the heat exchanger (32); and returning the cooled gas to the cavity;
wherein said method is characterized in that the gas around the rotary seal ring carrier (18) is captured by apertures (25) having flow scoops (26) positioned radially outside the rotary seal ring carrier (18), wherein the apertures (25) provide fluid communication between the cavity and the heat exchanger (32).

## Patentansprüche

1. Trocken laufende Gasdichtung zum Abdichten eines Hochdruckbereichs von einem Niederdruckbereich, mit: einem ortsfesten Dichtringträger (14), der einen ortsfesten Dichtring (16) hält;
einem drehbaren Dichtringträger (18), der in einem Hohlraum
einen drehbaren Dichtring (22) dem ortsfesten Dichtring (16) zugewandt hält;
einem in Fluidverbindung mit dem Hohlraum stehenden Wärmetauscher (32) und
einem Rückführkanal (34), der in Fluidverbindung mit dem Wärmetauscher (32) steht und einen dem Hohlraum benachbarten Rückführauslaß aufweist;
gekennzeichnet durch Öffnungen (25) mit radial außerhalb des drehbaren Dichtringträgers (18) angeordneten und in Fluidverbindung mit dem Hohlraum stehenden Strömungsschaufeln (26) zum Einfangen eines Teils des den drehbaren Dichtringträger (18) umgebenden Gases und zum Überführen des eingefangenen Gases zum Wärmetauscher (32) zur Kühlung, so daß das gekühlte Gas durch den der Dichtung benachbarten Rückführkanal (34) zum Hochdruckbereich zurückgeführt wird.

2. Trocken laufende Gasdichtung nach Anspruch 1, dadurch gekennzeichnet, daß sich ein Abschnitt (24) des ortsfesten Dichtringträgers (14) über zumindest einen Abschnitt des drehbaren Dichtringträgers (18) erstreckt und die Öffnungen (25) in dem ortsfesten Dichtringträger (14) ausgebildet sind.

3. Aktives Kühlsystem für eine trocken laufende Gasdichtung der Art, die einen ortsfesten Dichtring (16), einen mit einem Gehäuse (40) verbundenen ortsfesten Dichtringträger (14),
einen drehbaren Dichtring (22) und einen drehbaren Dichtringträger (18) zum Halten des drehbaren Dichtrings (22) in einem Hohlraum aufweist, wobei das aktive Kühlsystem aufweist:
einen ringförmigen Fortsatz (24) des ortsfesten Dichtringträgers (14), der dazu eingerichtet ist, sich über den drehbaren Dichtringträger (18) zu erstrecken, aber ihn nicht zu berühren;
eine in dem Gehäuse (40) ausgebildete Auslaßbohrung (30), die in Fluidverbindung mit dem Hohlraum steht;
einen in Fluidverbindung mit der Auslaßbohrung (30) stehenden Wärmetauscher (32); und
eine in dem Gehäuse (40) ausgebildete Rückführbohrung (34), die in Fluidverbindung mit dem Wärmetauscher (32) steht und einen dem Hohlraum benachbarten Rückführauslaß aufweist;
gekennzeichnet durch mehrere in dem ringförmigen Fortsatz (24) des ortsfesten Dichtringträgers (14) ausgebildete Öffnungen (25), um für eine Fluidverbindung zwischen dem Hohlraum und der Auslaßbohrung (30) zu sorgen.

4. Aktives Kühlsystem nach Anspruch 3, dadurch gekennzeichnet, daß die Öffnungen (25) Schaufeln (26) aufweisen, die sich von den Öffnungen (25) erstrecken und sich zum drehbaren Dichtringträger (18) erstrecken, aber diesen nicht berühren.

5. Aktives Kühlsystem nach Anspruch 4, bei dem der drehbare Dichtringträger (18) den drehbaren Dichtring (22) in einer ringförmigen Tasche (23) hält, ferner gekennzeichnet durch: einen in der Tasche (23) zwischen dem drehbaren Dichtringträger (18) und dem drehbaren Dichtring (22) ausgebildeten Strömungsweg (58);
mindestens ein durch den drehbaren Dichtringträger (18) verlaufendes und für Fluidverbindung mit dem Strömungsweg (58) in der Tasche (23) sorgendes Loch (36), das hin zur Rotationsrichtung geneigt ist, so daß Gas zum drehbaren Dichtring (22) gesogen wird, wenn der drehbare Dichtringträger (18) rotiert; und
eine Einrichtung zum Abführen des Gases aus dem Strömungsweg.

6. Aktives Kühlsystem nach Anspruch 5, dadurch gekennzeichnet, daß die Abführeinrichtung mindestens ein Loch (52) im äußeren Umfang der Tasche (23) aufweist.

7. Aktives Kühlsystem nach Anspruch 4, dadurch gekennzeichnet, daß es ferner eine Mündung (29) aufweist, die dazu eingerichtet ist, eine Fluidverbindung zwischen den Öffnungen (25) und einem Bereich zwischen der Rückseite des ortsfesten Dichtrings (16) und dem ortsfesten Dichtringträger (14) zu gestatten.

8. Verfahren zum Kühlen einer trocken laufenden Gasdichtung mit einem ortsfesten Dichtringträger (14) und einem drehbaren Dichtringträger (18) zum Abdichten eines Hilfs- oder Betriebsgases in einem Hohlraum, bei dem:
ein Teil des Gases um den drehbaren Dichtringträger (18) einge-fangen wird; das eingefangene Gas an einen Wärmetauscher (32) weitergeleitet wird; das eingefangene Gas durch den Wärmetauscher (32) gekühlt wird; und das gekühlte Gas zum Hohlraum zurückgeführt wird;
dadurch gekennzeichnet, daß das Gas um den drehbaren Dichtringträger (18) von Öffnungen (25) mit Strömungsschaufeln (26) eingefangen wird, die radial außerhalb des drehbaren Dichtringträgers (18) angeordnet sind, wobei die Öffnungen (25) für eine Fluidverbindung zwischen dem Hohlraum und dem Wärmetauscher (32) sorgen.

## Revendications

1. Un joint tournant de type sec pour du gaz, servant à isoler une zone à haute pression d'une zone de basse pression, le joint comprenant :
un support d'anneau de joint stationnaire (14) portant un anneau de joint stationnaire (16);
un support d'anneau de joint rotatif (18) portant un anneau de joint rotatif (22) dans une cavité pour faire face audit anneau de joint stationnaire (16);
un échangeur de chaleur (32) en communication fluidique avec la cavité; et
un conduit de retour (34) en communication fluidique avec l'échangeur de chaleur (32) et ayant un orifice de sortie de retour à proximité de la cavité;
dans lequel ledit joint tournant de type sec pour du gaz est caractérisé par des ouvertures (25) ayant des tubulures d'écoulement (26) positionnées radialement à l'extérieur du support d'anneau de joint rotatif (18) et en communication fluidique avec la cavité pour capter une partie du gaz entourant ledit support d'anneau de joint rotatif (18) et transférer le gaz capté vers l'échangeur de chaleur (32) pour le refroidir de telle façon que le gaz refroidi soit renvoyé par l'intermédiaire du conduit de retour (34) vers la zone à haute pression à proximité du joint.

2. Un joint tournant de type sec pour du gaz tel que revendiqué dans la revendication 1, caractérisé en ce qu'une partie (24) du support d'anneau de joint stationnaire (14) s'étend au-dessus d'au moins une partie dudit support d'anneau de joint rotatif (18) et en ce que lesdites ouvertures (25) sont formées dans ledit support d'anneau de joint stationnaire (14).

3. Un système de refroidissement actif pour un joint tournant de type sec pour du gaz du type ayant un anneau de joint stationnaire (16), un support d'anneau de joint stationnaire (14) attaché à un boîtier (40), un anneau de joint rotatif (22), et un support d'anneau de joint rotatif (18) pour porter l'anneau de joint rotatif (22) àl'intérieur d'une cavité, le système de refroidissement actif comprenant :
un prolongement annulaire (24) du support d'anneau de joint stationnaire (14) apte à s'étendre au-dessus mais sans le toucher, du support d'anneau de joint rotatif (18);
un alésage d'échappement (30) formé dans le boîtier (40), ledit alésage d'échappement (30) étant en communication fluidique avec la cavité;
un échangeur de chaleur (32) en communication fluidique avec ledit alésage d'échappement (30); et
un alésage de retour (34) formé dans le boîtier (40), ledit alésage de retour (34) étant en communication fluidique avec ledit échangeur de chaleur (32) et ayant un orifice de sortie de retour à proximité de la cavité;
dans lequel ledit système de refroidissement actif est caractérisé par une pluralité d'ouvertures (25) formées dans ledit prolongement annulaire (24) du support d'anneau de joint stationnaire (14) pour fournir une communication fluidique entre la cavité et l'alésage d'échappement (30).

4. Un système de refroidissement actif tel que revendiqué dans la revendication 3, caractérisé en ce que lesdites ouvertures (25) comprennent des tubulures (26) s'étendant à partir desdites ouvertures (25), lesdites tubulures (26) s'étendant vers, mais sans le toucher, le support d'anneau de joint rotatif (18).

5. Un système de refroidissement actif tel que revendiqué dans la revendication 4, dans lequel ledit support d'anneau de joint rotatif (18) porte ledit anneau de joint rotatif (22) dans une poche annulaire (23) et dans lequel ledit système est en outre caractérisé par :
un chemin d'écoulement (58) dans ladite poche (23) formée entre ledit support d'anneau de joint rotatif (18) et ledit anneau de joint rotatif (22);
au moins un trou (36) passant à travers ledit support d'anneau de joint rotatif (18) et fournissant une communication fluidique vers ledit chemin d'écoulement (58) dans la poche (23), ledit trou (36) étant incliné vers la direction de la rotation, le gaz étant de ce fait entraîné vers ledit anneau de joint rotatif (22) lorsque le support d'anneau de joint rotatif (18) est en train de tourner; et
des moyens pour évacuer ledit gaz à partir dudit chemin d'écoulement.

6. Un système de refroidissement actif tel que revendiqué dans la revendication 5, caractérisé en ce que lesdits moyens d'évacuation comprennent au moins un trou (52) dans la périphérie extérieure de ladite poche (23).

7. Un système de refroidissement actif tel que revendiqué dans la revendication 4, caractérisé en ce qu'il comprend en outre un orifice (29) apte à permettre une communication fluidique entre lesdites ouvertures (25) et une zone entre l'arrière dudit anneau de joint stationnaire (16) et ledit support d'anneau de joint stationnaire (14).

8. Une méthode de refroidissement d'un joint tournant de type sec pour du gaz ayant un support d'anneau de joint stationnaire (14) et un support d'anneau de joint rotatif (18) pour isoler un gaz de traitement à l'intérieur d'une cavité, la méthode comprenant :
le captage d'une partie du gaz autour du support d'anneau de joint rotatif (18); le transfert du gaz capté vers un échangeur de chaleur (32); le refroidissement du gaz capté avec l'échangeur de chaleur (32); et le renvoi du gaz refroidi vers la cavité;
dans laquelle ladite méthode est caractérisée en ce que le gaz autour du support d'anneau de joint rotatif (18) est capté par des ouvertures (25) ayant des tubulures d'écoulement (26) positionnées radialement à l'extérieur du support d'anneau de joint rotatif (18), dans lequel les ouvertures (25) fournissent une communication fluidique entre la cavité et l'échangeur de chaleur (32).
